# EUROPEAN PATENT APPLICATION

(11) **EP 1 215 793 A2**
(43) Date of publication of application: **19.06.2002**
(21) Application number: 01310506.9
(22) Date of filing: 17.12.2001
(51) Int. Cl.: H02J 3/14, H02H 9/04

(54) **Transient voltage suppression**

(30) Priority: 18.12.2000 GB 0030844
(71) Applicant: SWITCHED RELUCTANCE DRIVES LIMITED, Harrogate, North Yorkshire HG3 1PR (GB)
(72) Inventor: Elliott, Charles Richard, Calverley, Leeds LS28 5PS (GB)
(74) Representative: Hale, Peter

(57) **Abstract**

A switched reluctance drive is supplied from a DC bus which may have transient over-voltage disturbances on it. The transients are greatly reduced in magnitude and the switches in the drive are protected by switching on all phases of the machine together when the DC bus voltage rises above a pre-determined threshold.

## Description

This invention relates to transient voltage suppression in electrical systems.

In some installations of electrical equipment a fixed connection to the public electricity supply is not possible because the site does not have a utility connection (eg it may be in a geographically remote area or a construction site) or because the installation is mobile (eg it is on an automobile, a vessel or an aircraft). In these situations, the system is typically supplied by an alternator driven by a prime mover, such as an internal combustion engine, steam or gas turbine, etc. A storage battery is typically provided to store sufficient energy to start the prime mover and is re-charged by the alternator when there is sufficient generated capacity. The battery can also be used to supply the electrical load when the generator has insufficient output.

The loads on an electrical system may be purely resistive, eg heaters, or can be motors or actuators, but at least one of the loads is typically the storage battery.

Since the alternator has a maximum output which is of the same order of magnitude as the consumption of the loads, adding or removing one of the loads can produce significant voltage transients across the supply rails. While it is the task of a voltage regulator to suppress these transient disturbances and maintain the desired steady-state output from the alternator, there is a significant limit to the speed at which it can respond to changes in demand. This limit arises from the facts that the field circuit of a typical alternator has a relatively long time constant (mainly due to the use of unlaminated pole pieces in the rotor construction) and that the voltage regulator is normally a single-quadrant device, so it cannot compensate well for fast transients. In order to prevent these transients causing damage to other equipment, other suppression measures have to be adopted. One approach is to connect a transient voltage suppressor across the rails to absorb transient overvoltages and dissipate the associated energy.

The transient voltage suppressor is often rated to cope with the worst transients likely to occur on the rails. These can be when the battery is disconnected while drawing charging current from the rails - a condition known as "load dump". It may be the result of intentional disconnection by the user or by unintentional disconnection through failure of a connector. This transient can be severe: for example on a nominal 12V system the voltage can rise to 80V and the pulse can have a duration of over 300msec. Standards have been drawn up for equipment designed for operation on a bus subject to such transients. For example, ISO 7637 defines a test pulse based on a load dump. However, rating the transient voltage suppressor to cope with the load dump condition usually results in a component of significant cost, whose capabilities are seldom, if ever, required. While this is technically an effective solution, it is not cost-effective.

Other solutions which are known are to insert a relay in series with the rail and to open it as the transient raises the voltage above a particular threshold. If the relay operates quickly enough, this arrangement gives good protection but has the disadvantage that the supply to all the loads, some of which may be safety critical, is interrupted. A further solution is to rate the loads to survive the higher bus voltage, but this is seldom cost-effective, especially in the high-volume production of, for example, automobile electrical systems.

The invention is defined in the accompanying independent claims. Some preferred features are recited in the dependent claims.

The invention allows at least some of the energy in a transient voltage to be absorbed without using an expensive, highly rated, voltage suppressor or interrupting the supply to other loads. It has been recognised that the phase or phases of certain electrical machines can be used to absorb energy in a voltage transient. Thus, by detecting the onset of such a transient it is possible to connect such a machine to absorb the energy. The electrical machine itself is generally available to perform its normal duties but can be connected to perform this additional task. Electrical machines with a single phase or independent phases, i.e. physically and electrically isolated from each other, such as switched reluctance machines, can be used advantageously in this way to connect one or more phases simultaneously or in sequence, depending on the severity of the transient.

Preferably, the same switch arrangement that is used to operate the electrical machine can be used to connect the or each phase to absorb the energy in the transient.

The duration for which the phase or phases is/are connected to absorb the transient can be fixed or based on monitoring the transient itself. Similarly, the switching on of the or each phase can be at each and every voltage transient or, preferably, it is subject to a threshold only above which it is used.

The operation of the electrical machine can be carried on normally until the transient is detected at which time the normal operation is overridden to address the transient voltage.

The invention can be put into practice in various ways some of which will now be described with reference to the accompanying drawings, in which:
Figure 1 shows an example of an electrical system embodying the invention.
Figure 2 shows the connection of one phase winding in a power converter; and
Figure 3 shows a typical prior art inverter and induction motor.

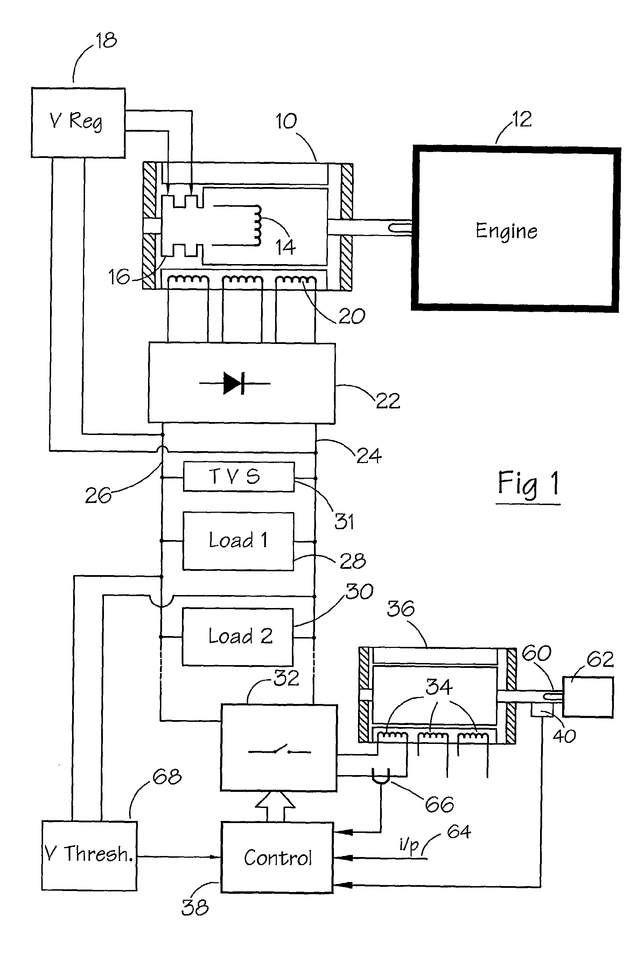

Referring to Figure 1, an alternator 10 is driven by an internal combustion engine 12. The alternator 10 is of the conventional 3-phase claw-pole, homopolar type, with its single field winding 14 supplied via slip-rings 16 from a simple voltage regulator 18. The alternating output from stator windings 20 is rectified by a diode bridge 22 and provides a voltage bus with a large DC component and superimposed ripple on rails 24/26. Various loads 28/30 are connected across the rails 24/26 at the output of the diode bridge 22. One of these loads may be a storage battery. A transient voltage suppressor 31 is also connected across the rails 24/26 to absorb the energy in transient pulses. As discussed above, however, the suppressor 31 would have to be highly rated to cope with the rare, but potentially catastrophic, event of a load dump. As described below, the invention removes all or part of the burden on the suppressor 31.

Also connected in parallel with the loads 28/30 is a power converter 32 having a switching circuit for each phase winding 34 of a switched reluctance machine 36. The characteristics and operation of switched reluctance systems are well known in the art and are described in, for example, "The characteristics, design and application of switched reluctance motors and drives" by Stephenson and Blake, PCIM'93, Nürnberg, 21-24 June 1993, incorporated herein by reference. The switching of the power converter by an electronic control unit 38 must be correctly synchronised to the angle of rotation of the rotor for proper operation of the drive, and a rotor position detector 40 is typically employed to supply signals corresponding to the angular position of the rotor. The rotor position detector 40 may take many forms, including a physical sensor as illustrated, or a software algorithm. Its output may also be used to generate a speed feedback signal.

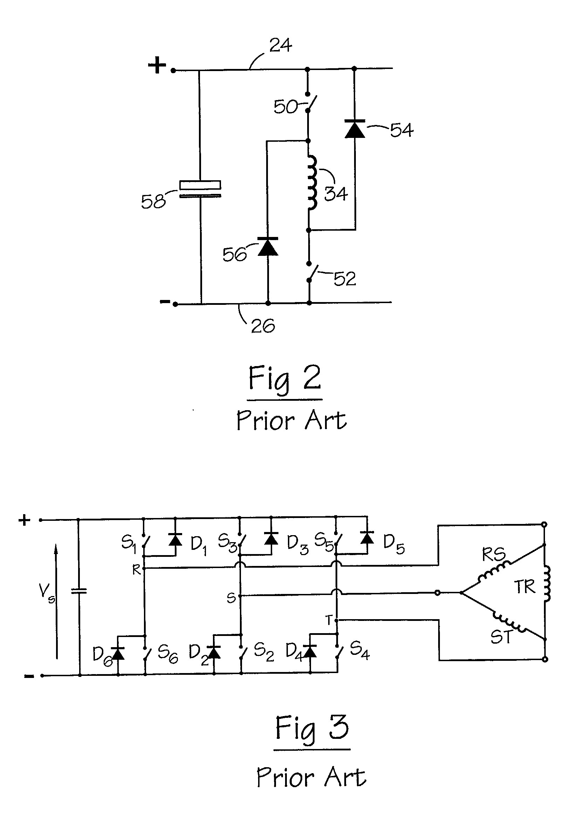

A switching circuit of the power converter 32 for one phase of a polyphase system is illustrated in Figure 2, although an identical circuit would be similarly connected between the rails 24/26 for each of the three phases 34 of the machine shown. Many different power converter topologies are known, several of which are discussed in the Stephenson paper cited above. In the circuit of Figure 2, the phase winding 34 of the machine is connected in series with two switching devices 50 and 52 across the positive and negative rails 24 and 26. Rails 24 and 26 are collectively described as the "DC link" in respect of the converter. Energy recovery diodes 54 and 56 are connected to the winding to allow the winding current to flow back to the DC link when the switches 50 and 52 are opened. A capacitor 58, known as the "DC link capacitor", is connected across the DC link to source or sink any alternating component of the DC link current (ie the so-called "ripple current") which cannot be drawn from or returned to the supply. In practical terms, the capacitor 58 may comprise several capacitors connected in series and/or parallel and, where parallel connection is used, some of the elements may be distributed throughout the converter. The circuit is known as the two-switch-per-phase type and is connected, in accordance with the embodiment of the invention, across the rails 24/26 from the diode bridge 22.

Referring back to Figure 1, the mechanical output from the shaft 60 of the motor 36 is connected to a mechanical load 62. The switching performed by the switching circuits of the power converter 32 is controlled by the controller 38 based on a demand input 64, and current and rotor position feedback from the sensors 66/40. A voltage threshold detector 68 is connected across the output of the diode bridge 22. In the presence of a voltage on the output rails 24/26 of the diode bridge 22 above a given magnitude (as described below) the detector 68 outputs a signal to the controller 38 which closes the switches of all or some of the phases of the polyphase machine 36 to absorb the energy in the transient voltage to protect the loads 28/30.

The invention makes use of the properties of a switched reluctance drive system to protect both its own power electronics and other equipment from transient voltage disturbances. Its ability to do this stems from two aspects. Firstly, the phase windings of the machine are physically and electrically isolated from each other. Secondly, the particular topology of power converter used for such isolated phases enables the phases to be switched independently of each other. The significant point to note in the switch topology for one phase illustrated in Figure 2, i.e. the 2-switch-per-phase circuit, is that the switches 50/52 are in series with the winding. This is a feature common to the circuits typically used for these switched reluctance machines. Other such circuits are described in the paper by Stephenson and Blake cited above and these are all in contrast to the inverter topology used for other variable speed drives using induction, synchronous or permanent magnet motors (shown in Figure 3) where the two switches for a phase leg, eg S₁ and S₆ in Figure 3, are in series directly across the DC bus without any interposing winding.

Solid-state switches can survive much greater voltage transients when they are closed than when they are open. However, it is a consequence of the layout of the inverter shown in Figure 3 that when, say, the switches S₁ and S₂ are closed to connect the winding RS to the supply, switches S₆ and S₃ are automatically exposed to the full supply voltage, including any transients on the supply. In the case of the switched reluctance machine converter circuit of Figure 2, *both* switches in a phase leg are closed together when the phase is conducting. Because the inductance of the phase winding is placed across the rails 24/26, the current rises relatively slowly. By contrast, if the two switches of a phase leg of the inverter in Figure 3 are closed together, they represent a short circuit across the rails and the rise in current is very rapid and generally destructive to the switches.

Hence, if the switches 50/52 of a phase in a switched reluctance system are closed when an over-voltage transient occurs on the voltage bus supplying the drive system, the current in the phase will rise relatively slowly but, because they are closed, the switches will be much more likely to survive the transient. The invention lies in switching on at least one phase of the switched reluctance converter when the onset of a transient is detected. Preferably the switches of each phase are closed, thus protecting them from the transient. This brings a second benefit in that the switched reluctance machine absorbs energy from the transient, thus reducing its magnitude and protecting other equipment on the same supply rails.

The effect of this switching action on the machine is somewhat complex, since it depends on, *inter alia*: the per unit resistance of the phase windings (which in turn depends on the relative machine size); the pole arc geometry; the coupled load; the inertia of the load; and on whether the machine was initially rotating. For a small machine, with a high per unit resistance, the current will likely be limited by the phase resistance, whereas in a larger machine the resistive voltage drop will be negligible. In general, the torque developed by the machine, when all the phases are switched on simultaneously, is small compared with its rated torque and, at some rotor angles, will be zero. If the rotor is initially at rest, and in the absence of any significant load torque, the rotor will therefore turn a maximum of half a revolution and remain there. In the presence of load torque, the machine may not rotate at all. If the machine is initially rotating, it is likely to gradually come to rest while the current rises in the phase windings. It is therefore possible to apply this method whether or not the machine is initially rotating.

The effect of dumping energy in the switched reluctance machine is generally insignificant as far as the machine is concerned, leading only to some additional heating in the windings, but the use of the machine to absorb energy is very significant as far as the transient voltage suppressor 31 is concerned, allowing a much reduced rating for this component and hence reduced cost.

It would be possible, in theory, to remove the transient voltage suppressor 31 altogether and rely on the ability of the switched reluctance machine and its switching circuits in the power converter 32 to absorb the transients above the set threshold. As a practical matter, however, to do so would mean that the performance of the switched reluctance motor would be too frequently undermined by the perturbations it would cause. Thus, the transient voltage suppressor 31 is retained but with a reduced rating to handle the relatively brief, lesser transients that are likely to occur most frequently. This leaves the switched reluctance motor to cope with the larger transients that are likely to occur considerably less frequently. Reference is made above to the events giving rise to potentially major load dump transients, e.g. disconnection of the battery. If this happens at all, it will be only very rarely. The switched reluctance motor system performs its own motor task for the vast majority of the time, but is available to absorb the relatively large energy of such a major voltage transient of relatively long duration if and when it occurs.

To implement the invention, the voltage threshold in the detector 68 is set to a level under which all the equipment on the DC bus can operate without damage. For a 12V system (typical in an automobile), this could be around 24V. During voltage transients up to this threshold, the voltage regulator 18 will attempt to compensate by modulating the field current in known manner, and to the extent that it fails to hold the voltage, the loads will accept the transients and survive them. When the voltage rises above the set threshold, or rises above the threshold for a predetermined period, the controller is caused to close all switches 50/52 in the converter 32 and waits till the combination of the load presented by the switched reluctance machine, the voltage regulator 18 and the transient suppressor 31 reduce the voltage below the threshold. The switches 50/52 can then be opened again, either simultaneously or in a sequence. The simplest method is to open them all simultaneously, though on some systems this may allow the voltage across the rails 24/26 to rise again as the energy sink is lost. A more sophisticated method is to open them one phase leg at a time, with a time delay between each phase. This will reduce any tendency for the rail voltage to oscillate. The time delay can be predetermined between switch openings or it may be based on monitoring the decline in the transient itself, such that the switches are opened at set points in the fall of the voltage transients. A yet further method is to open the phases in a sequence beginning with the one which has the highest current. This method is preferred, since it reduces the risk of overcurrent in the phases (and hence potential damage to the switches 50/52) but preserves an energy sink for the longest possible time.

Other variants of the method include turning on the phases in a sequence as the voltage rises over a series of thresholds; timing the length of time the switches are closed and opening them at a time calculated, say, to be less than the time the current would take to rise to a value which would be injurious to the switches; modulation of the switches after the current has risen to a predetermined level to keep the phase current within a safe level or to control the bus voltage; or combining several of the above techniques.

The above example has illustrated the invention in conjunction with a three-phase switched reluctance drive. It will be appreciated that a switched reluctance system having any number of phases, including only one, could be used.

Other types of machine to which the invention is susceptible include stepper motors and some types of single phase induction motors in which the main and starting windings are independently supplied.

The skilled person will appreciate that variation of the disclosed arrangements are possible without departing from the invention. Accordingly, the above description of several embodiments is made by way of example and not for the purposes of limitation. It will be clear to the skilled person that minor modifications can be made to the arrangements without significant changes to the operation described above. The present invention is intended to be limited only by the scope of the following claims.

## Claims

1. A method of absorbing energy in a voltage transient in an electrical supply circuit, the method comprising:
detecting the onset of the voltage transient; and
connecting the phase of an electrical machine, or at least one phase of a polyphase electrical machine having independent phase windings, across the supply circuit in response to detecting the onset so as to absorb the energy in the transient.

2. A method as claimed in claim 1 including detecting a decay in the voltage transient and assuming normal operation of the electrical machine when the transient voltage has decayed below a predetermined magnitude.

3. A method as claimed in claim 1 or 2 in which the electrical machine is a switched reluctance machine.

4. A method as claimed in claim 1, 2 or 3 in which the electrical machine is connected across the electrical supply circuit by switch means serially connected with the at least one phase, the method further comprising using the switch means to operate the electrical machine normally and to connect the at least one phase across the electrical load.

5. A method as claimed in any of claims 1 to 4 in which the at least one phase is connected across the supply circuit after the voltage transient has exceeded a predetermined magnitude.

6. A method as claimed in claim 5 in which the at least one phase is connected across the supply circuit after the voltage transient has exceeded the predetermined magnitude for a predetermined period.

7. A method as claimed in any of claims 1 to 6 in which each of a plurality of phases is connected across the supply circuit either simultaneously or in sequence and is disconnected from the supply circuit either simultaneously or in sequence when the transient has decayed to a predetermined level.

8. A method as claimed in any of claims 1 to 7 including overriding normal operation of the electrical machine in response to the voltage transient.

9. An electrical system comprising an electrical supply, an electrical machine having at least one independent phase winding and a switch circuit for connecting the or each phase winding of the machine across the electrical supply, means for detecting a voltage transient across the supply to produce an output, and control means responsive to the output to connect the or at least one phase winding of the electrical machine across the supply to absorb energy in the transient voltage.

10. A system as claimed in claim 9, including means for detecting a decay in the voltage transient to produce another output, the control means being responsive to the other output to assume normal operation of the machine.

11. A system as claimed in claim 9 or 10 in which the electrical machine is a switched reluctance machine.

12. A system as claimed in claim 9, 10 or 11 in which the switch circuit is also arranged to control the normal operation of the switched reluctance machine.

13. A system as claimed in any of claims 9 to 12 in which the means for detecting a voltage transient include a threshold detector arranged to produce the output when the voltage of the electrical supply exceeds a predetermined level, the controller being responsive to the output to connect the at least one phase of the electrical machine across the supply to absorb the energy in the transient voltage in the at least one phase.

14. A system as claimed in claim 13 in which the threshold detector is operable to produce the output when the voltage across the electrical supply exceeds the predetermined level for a predetermined period.

15. A system as claimed in any of claims 9 to 14 in which the electrical machine has a plurality of phase windings and the controller is operable to disconnect the phase windings from the electrical supply by actuating the switch circuit to disconnect the phase windings in sequence.
